# EUROPEAN PATENT SPECIFICATION

(11) **EP 2 472 192 B1**
(45) Date of publication and mention of the grant of the patent: **19.02.2020**
(21) Application number: 11195881.5
(22) Date of filing: 28.12.2011
(51) Int. Cl.: F24F 13/14, F24F 13/15, F24F 13/075

(54) **Pressure valve and valve framework**
Druckventil und ventilrahmen
Clapet de pression et cadre de clapet

(30) Priority: 29.12.2010 FI 20106377
(43) Date of publication of application: 04.07.2012
(73) Proprietor: Temet OY, 00880 Helsinki (FI)
(72) Inventor: Kataja, Kalle, 00790 Helsinki (FI); Rytkönen, Toni, 00880 Helsinki (FI)
(74) Representative: Boco IP Oy Ab

(56) References cited:
- EP-A1- 1 031 669
- EP-A1- 2 146 156
- WO-A1-2009/136006
- GB-A- 2 194 329
- US-A- 4 579 047

## Description

### Background of the Invention

The object of the invention is a blast valve according to the preamble of Claim 1, the valve comprising a valve framework at which valve blocks can be supported, said framework comprising an opening into which valve blocks are arranged to form at least two adjacent valve block columns such, that the valve blocks essentially completely close the opening, there being at least one valve block comprising a frame containing at least one flow channel, each flow channel being provided with a closing element, which is movable at least from an open position to a closed position, and wherein, in the opening of the valve framework, between two adjacent valve block columns, a beam structure is installed, which beam structure is supported at its ends to the valve framework and to which the valve blocks partly are supported.

Equipment shelters or civil defence shelters are generally provided with some sort of air-conditioning system. Assuming that the protection would be effective also in the case of an explosion occurring outside the civil defence shelter, there has to be a blast valve in the air-conditioning system preventing the blast caused by the explosion from entering the civil defence shelter. The valve block or the valve has to close immediately influenced by the blast caused by the explosion but, on the other hand, the blast valve has to stay open in normal situations in order to allow the exhaust and supply air flow. Also, in petrochemical plants, oil rigs, processing industry and other similar establishments, e.g. air-conditioning plants are usually being protected by means of blast valves against a blast caused by e.g. an explosion. Such blast valves can be installed to protect, for example, the spot in an air-conditioning system, where supply air from the environment is being input into the air-conditioning system or to protect the spot in an air-conditioning system, where exhaust air is being output from the air-conditioning system into the environment. Blast valves also can be installed into an air-conditioning system for compartmentalization of the air-conditioning system and thus preventing a blast from spreading within the air-conditioning system.

GB 2194329 discloses a blast valve with two columns of valves within a frame separated by a pillar. From the publication FI 755994, a valve block for civil defence shelters, or equivalent, is known. Several valve blocks of this type can be used at the same site such, that the valve blocks are arranged in the opening of a valve framework to form at least two valve block columns in such a way, that the valve blocks essentially completely cover the opening in the valve framework. There is a beam structure between two adjacent valve block columns, which beam structure is attached to the valve framework and to which the valve blocks at least partly are supported. In this manner, the valve blocks in a blast valve with two columns of valve blocks, are supported to the valve framework and to the beam structure. In blast valves with more than two valve block columns, those valve blocks that do not border onto the valve framework, are supported solely to the beam structures. Well known is the beam structure of a valve framework in a solution of this type, in which a beam structure made of I-beams is provided in the opening in the valve framework. In this, there is a problem in that the size assortment of I-beams is limited. That restricts the dimensioning of the blast valve and, in particular, of the valve frameworks of blast valves. Correspondingly, the selection of material thicknesses in I-beams is also limited, and thus, the dimensioning of blast valves and, in particular, of the valve framework for blast valves for various purposes is problematic. As a product, an I-beam is also such, that it is hard to manufacture on your own, and thus, almost always, it has to be purchased as a ready-made product.

### Brief Description of the Invention

An objective of the invention is to solve the aforementioned problems.

The objective of the invention is achieved by means of a blast valve according to the independent Claim 1.

The preferable embodiments of the invention are presented in the dependent claims.

In a blast valve, there is always at least one beam structure between two adjacent valve block columns, said beam structure comprising two profiles of a U-shaped cross-section shape having their web plates connected such, that said two profiles of a U-shaped cross-section shape form a structure of an I-shaped cross-section shape, i.e. a structure similar to an I-beam.

Correspondingly, in the valve framework, in the opening of the valve framework, a beam structure is provided comprising two profiles of a U-shaped cross-section shape having their web plates connected such, that said two profiles of with a U-shaped cross-section shape form a structure of an I-shaped cross-section shape.

In one blast valve according to the invention, there is such a beam structure between two adjacent valve block columns that contains at least one profile of a U-shaped cross-section shape formed by edging a blank such that, by edging, a profile of a U-shaped cross-section shape comprising a web and two flanges is formed out of the blank.

Correspondingly, in a valve framework according to the invention, the beam structure preferably, but not necessarily, contains at least one profile of a U-shaped cross-section shape that is formed out of a blank by edging such, that, out of the blank, a profile of a U-shaped cross-section shape comprising a web and two flanges was formed.

By using two profiles of a U-shaped cross-section shape instead of an I-beam, the beam structure of a valve framework can be dimensioned in a better way for various purposes, since a profile of a U-shaped cross-section shape can be manufactured out of plate material, e.g. out of blanks, by edging. The assortment of plates is much larger than that of I-beams, and therefore such a material thickness of the beam structure, for example, can be selected, which cannot be found as an I-beam. By manufacturing the beam structure out of plate material, the flanges and the web of the profile of a U-shaped cross-section shape can be made to desired dimensions.

### List of Figures

Below, some preferable embodiments are presented in more detail with reference to the accompanying figures, of which
Figure 1 shows a preferable embodiment of a blast valve,
Figure 2 shows the valve framework of the blast valve shown in Figure 1, which framework, at the same time, is a preferable embodiment of the valve framework,

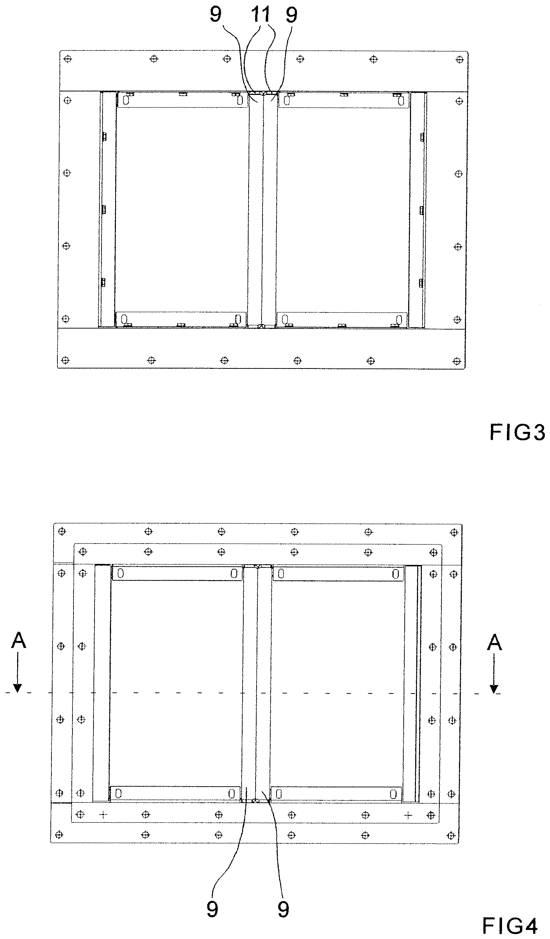

Figure 3 shows the valve framework shown in Figure 2, viewed from the so called protected side,
Figure 4 shows the valve framework shown in Figure 2, viewed from the so called pressure side,

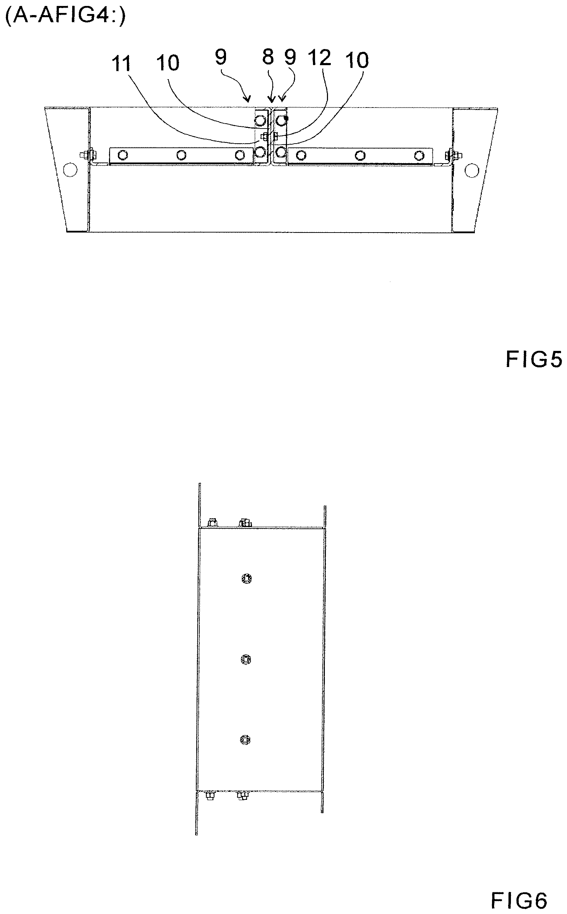

Figure 5 shows the valve framework shown in Figure 2 in section along the line A-A in Figure 4,
Figure 6 shows the valve framework shown in Figure t1 viewed from the side,

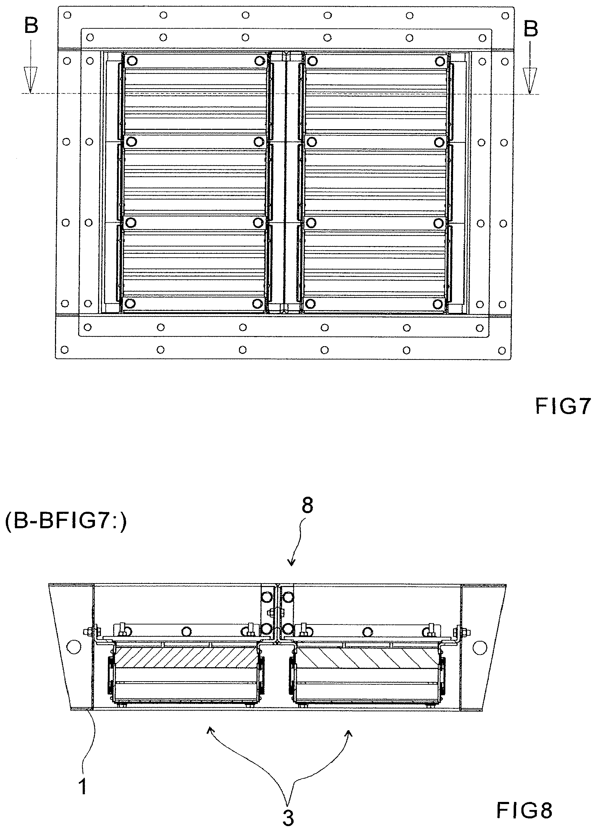

Figure 7 shows the blast valve shown in Figure 1 viewed from the so called protected side
Figure 8 shows the blast valve shown in Figure 1 in section along the line B-B in Figure 7, and
Figure 9 the beam structure of the valve framework of Figures 1 - 8.

### Detailed Description of the Invention

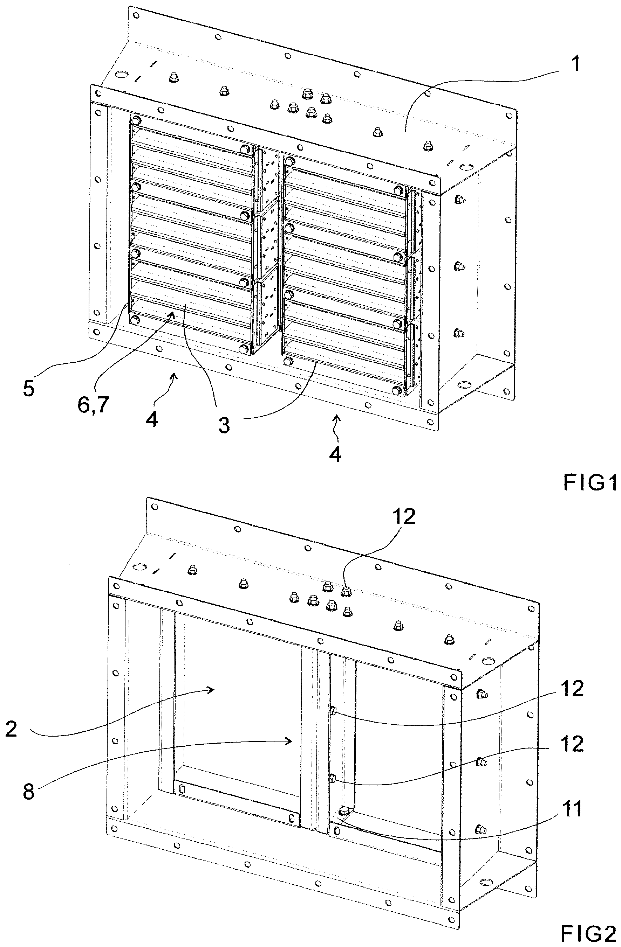

Figure 1 shows a blast valve comprising a valve framework 1, to which valve blocks 3 are supported, and which framework comprises an opening 2, into which valve blocks 3 are arranged forming at least two adjacent valve block columns 4 in such a manner, that the valve blocks 3 essentially completely close the opening 2.

The valve framework may have been formed out of plates or blanks, by edging.

Figure 1 shows one such blast valve comprising two valve block columns 4 such, that there are 3 valve blocks 3 in each valve block column 4. To a person skilled in the art, it is obvious, that the number of valve blocks 3 can be different. The number of valve block columns 4 can be, for instance, three or four or more, and in one valve block column 4 there can be, for instance, between two and twelve valve blocks 3, or more.

In a blast valve there is at least one valve block 3 comprising a frame 5 containing at least one flow channel 6, wherein each flow channel 6 is provided with a closing element 7, which is movable at least from an open position (not shown in the Figures) to a closed position (not shown in the Figures).

In the opening 2 of the valve framework 1, between two adjacent valve block columns 4, a beam structure 6 is installed, being supported at its ends to the valve framework 1 and to which the valve blocks 3 partly are supported. The Figures show a valve framework 1 having one beam structure 8, since the number of valve block columns 4 is two. In case there are three valve block columns 4, there are, correspondingly, two beam structures 8 in the valve framework 1, and in case there are four valve block columns 4, there are, correspondingly, three beam structures 8 in the valve framework 1 such, that one beam structure 8 always will be fitted between two adjacent valve block columns 4, said beam structure being supported at its ends to the valve framework 1 and to which beam structure the valve blocks 3 partly are supported.

The beam structure 8 comprises two profiles 9 of a U-shaped cross-section shape having their webs 10 connected such, that said two profiles 9 of a U-shaped cross-section shape form a structure of an I-shaped cross-section shape i.e. a structure similar to an I-beam.

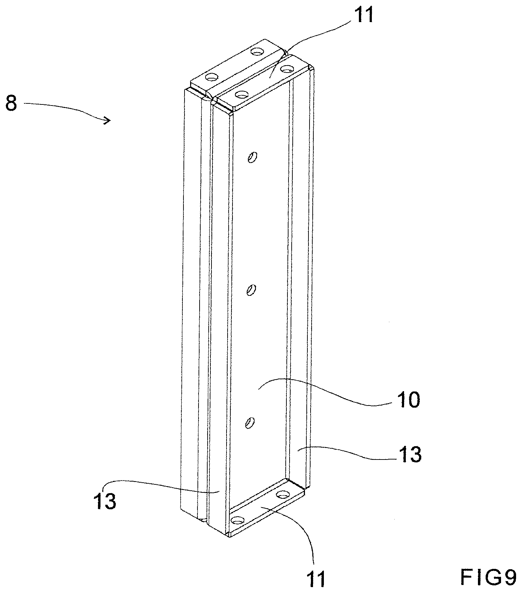

The beam structure 8 contains preferably, but not necessarily, at least one profile 9 of a U-shaped cross-section shape into the end of which a fastening structure 11 for fastening of the beam structure 8 to the valve framework 1 has been formed by edging. In the Figures 9, the beam structure 8 comprises two profiles 9 of a U-shaped cross-section shape, into both ends of which a fastening structure 11 has been formed by edging. In the figures, the beam structure 8 is fastened to the valve framework 1 by means of a bolt-nut combination 12.

The beam structure 8 may preferably, but not necessarily, contain at least one profile 9 of a U-shaped cross-section shape to the end of which a separate fastening structure (not shown in the figures) has been attached for fastening the beam structure 8 to the valve framework 1. Such a separate fastening structure can be fastened, for example by welding, to the valve framework 1.

The beam structure 8 may preferably, but not necessarily, contain at least one profile 9 of a U-shaped cross-section shape, which at least partly perforates the valve framework 1 for fastening the beam structure 8 to the valve framework 1.

The beam structure 8 contains preferably, but not necessarily, at least one profile 9 of a U-shaped cross-section shape formed out of a blank by edging (not shown in the Figures) such, that a profile of a U-shaped cross-section shape comprising a web 10 and two flanges 13 is formed out of the blank by edging.

The blast valve contains preferably, but not necessarily, a beam structure 8, the two profiles 9 of which of a U-shaped cross-section shape are fastened to each other. The figures show such a blast valve, wherein the two profiles 9 of a U-shaped cross-section shape of the beam structure 8 are fastened to each other with a bolt-nut combination 13.

The blast valve contains preferably, but not necessarily, a beam structure 8, the two profiles 9 of which of a U-shaped cross-section shape are essentially identical in cross-section shape.

The blast valve contains preferably, but not necessarily, a beam structure 8, the two profiles 9 of which of a U-shaped cross-section shape are of essentially the same length.

The blast valve contains preferably, but not necessarily, at least one valve block 3, in which each closing element 7 is adapted to move, influenced by a blast, from an open position to a closed position.

The blast valve contains preferably, but not necessarily, at least one valve block 3, in which each closing element 7 spring loaded such, that the closing element 7, influenced by a blast, moves to a closed position and, after the blast, back to an open position.

Further possible embodiments that are not part of the invention and therefore not covered by the claims are outlined below. The blast valve contains preferably, but not necessarily, at least one valve block 3, in which each closing element 7 spring loaded such, that the closing element 7 can move in two directions from the open position; to a first closed position (not shown in the Figures) for preventing an overpressure from forming in the protected space and, correspondingly, to a second closed position (not shown in the Figures) for preventing a vacuum from forming in the protected space. Such a valve block 3 is presented in the Finnish Patent publication FI 75994.

Alternatively, the valve block 3 can be such, that it contains at least one valve block 3, in which each closing element 7 spring loaded such, that the closing element 7, influenced by a blast, moves to a closed position and that the closing element 7 remains in the closed position after the blast. Then, the closing elements 7 can be such, that they manually can be switched back from the closed position to an open position or such, that they permanently remain in the closed position.

The blast valve can be such, that it is intended to be installed surface mounted by e.g. welding or bolting at an opening of the space to be protected. Alternatively, the blast valve can be such, that it is intended to be cast, at least partly, into a concrete wall. The blast valve can also be such, that it is intended to be installed in an air-conditioning duct or between two air-conditioning ducts. An object which is not part of the invention is also a valve framework 1, to which valve blocks 3 can be supported and which comprises an opening 2, into which valve blocks 3 can be arranged to form at least two adjacent valve block columns 4 such, that the valve blocks 3 essentially completely close the opening 2.

The valve framework 1 can be formed out of plates or blanks by edging.

The valve framework 1 comprises a beam structure 8 arranged into the opening 2, which beam structure is supported at its ends to the valve framework 1 and to which at least one valve block 3, at least partly, can be supported.

In the opening 2 of the valve framework 1 such a beam structure 8 is arranged, which comprises two profiles 9 of a U-shaped cross-section shape the webs 10 of which are interconnected such, that said two profiles 9 of a U-shaped cross-section shape form a structure of an I-shaped cross-section shape.

The beam structure 8 contains preferably, but not necessarily, at least one profile 9 of a U-shaped cross-section shape to the end of which a fastening structure 11 has been formed by edging for fastening the beam structure 8 to the valve framework 1.

The beam structure 8 contains preferably, but not necessarily, at least one profile 9 of a U-shaped cross-section shape to the end of which a separate fastening structure (not shown in the Figures) has been attached for fastening the beam structure 8 to the valve framework 1.

The beam structure 8 contains preferably, but not necessarily, at least one profile 9 of a U-shaped cross-section shape, which at least partly perforates (not shown in the figures) the valve framework 1 for fastening the beam structure 8 to the valve framework 1.

The beam structure 8 contains preferably, but not necessarily, at least one profile 9 of a U-shaped cross-section shape formed out of a blank by edging such, that a profile of a U-shaped cross-section shape comprising a web and two flanges is formed out of the blank by edging.

The valve framework may contain a beam structure 8, the two profiles 9 of which of a U-shaped cross-section shape are fastened to each other.

The valve framework may contain a beam structure 8, the two profiles 9 of which of a U-shaped cross-section shape are essentially identical in cross-section shape.

The valve framework may contain a beam structure 8, the two profiles 9 of which of a U-shaped cross-section shape are of essentially the same length.

Into the valve framework 1 such valve blocks 3, for example, can be arranged, in which each closing element 7 is adapted to move, influenced by a blast, from an open position to a closed position.

Into the valve framework 1 such valve blocks 3, for example, can be arranged, in which each closing element 7 spring loaded such, that the closing element 7 moves, influenced by a blast, to a closed position and, after the blast, back to the open position.

Into the valve framework 1 such valve blocks 3, for example, can be arranged, in which each closing element 7 spring loaded such, that the closing element 7 can move in two directions from an open position; to a first closed position (not shown in the Figures) for preventing an overpressure from forming in the protected space and, correspondingly, to a second closed position (not shown in the Figures) for preventing a vacuum from forming in the protected space. Such a valve block 3 is presented in the Finnish Patent publication FI 75994.

Into the valve framework 1 such valve blocks 3, for example, can be arranged, in which each closing element 7 spring loaded such, that the closing element 7, influenced by a blast, moves to a closed position and that the closing element 7 remains in the closed position after the blast. Then, the closing elements 7 can be such, that they manually can be switched back from the closed position to an open position or, that they permanently remain in the closed position.

Into the valve framework 1 such valve blocks 3, for example, can be arranged, in which each closing element 7 manually can be moved between an open position and a closed position.

To a person skilled in the art, it is evident that, with advances in technology, the basic idea of the invention can be implemented in many different ways. Thus, the invention and its embodiments are not limited to the examples described above, but rather, they can vary within the scope of the patent claims.

## Claims

1. A blast valve comprising a valve framework (1), to which valve blocks (3) can be supported, and which comprises an opening (2), into which valve blocks (3) are arranged to form at least two adjacent valve block columns (4) such, that the valve blocks (3) essentially completely close the opening (2),
wherein there is at least one valve block (3) having a frame (5) including at least one flow channel (6), a closing element (7) having been arranged into each flow channel (6), which closing element (7) can be moved at least from an open position to a closed position, and
wherein, into the opening (2) in the valve framework (1), in between two adjacent valve block columns (4), a beam structure (8) is arranged being supported at its ends to the valve framework (1) and to which beam structure (8) at least one valve block (3) partly is supported,
**characterized in that said** beam structure (8) comprises two profiles (9) of a U-shaped cross-section shape having their webs (10) interconnected such, that said two profiles (9) of a U-shaped cross-section shape form a structure of an I-shaped cross-section shape.

2. The blast valve according Claim 1, **characterized in, that** the beam structure (8) comprises at least one profile (9) of a U-shaped cross-section shape at the end of which a fastening structure has been formed by edging for fastening the beam structure (8) to the valve framework (1).

3. The blast valve according Claim 1 or 2, **characterized in, that** the beam structure (8) comprises at least one profile (9) of a U-shaped cross-section shape to the end of which a separate fastening structure has been attached for fastening the beam structure (8) to the valve framework (1).

4. The blast valve according to any one of the Claims 1 - 3, **characterized in, that** the beam structure (8) comprises at least one profile (9) of a U-shaped cross-section shape, which profile at least partly perforates the valve framework (1) for fastening the beam structure (8) to the valve framework (1).

5. The blast valve according to any one of the Claims 1 - 4, **characterized in, that** the beam structure (8) comprises at least one profile (9) of a U-shaped cross-section shape, which profile is formed out of a blank by edging such, that, out of the blank, a profile (9) of a U-shaped cross-section shape comprising a web and two flanges is formed by edging.

6. The blast valve according to any one of the Claims 1 - 5, **characterized in, that** it comprises a beam structure (8), the two profiles (9) of a U-shaped cross-section shape of which are attached to each other.

7. The blast valve according to any one of the Claims 1 - 6, **characterized in, that** it comprises a beam structure (8), the two profiles (9) of a U-shaped cross-section shape of which are essentially identical in cross-section shape.

8. The blast valve according to any one of the Claims 1 - 7, **characterized in, that** it comprises a beam structure (8), the two profiles (9) of a U-shaped cross-section shape of which are of essentially the same length.

9. The blast valve according to any one of the Claims 1 - 8, **characterized in, that** it comprises at least one valve block (3) into which a closing element (7) is arranged to move, influenced by a blast, from an open position to closed position.

10. The blast valve according to any one of the Claims 1 - 9, **characterized in, that** it comprises at least one valve block (3) in which each closing element (7) is spring loaded such, that each closing element (7) is adapted to move, influenced by a blast, from an open position to a closed position, and such, that each closing element (7) is adapted to move back to the open position after the blast.

## Patentansprüche

1. Explosionsschutzventil, das einen Ventilrahmen (1) aufweist, an dem Ventilblöcke (3) gelagert werden können und der eine Öffnung (2) aufweist, in denen Ventilblöcke (3) angeordnet sind, um mindestens zwei benachbarte Ventilblocksäulen (4) so auszubilden, dass die Ventilblöcke (3) die Öffnung (2) im Wesentlichen vollständig verschließen,
wobei es mindestens einen Ventilblock (3) gibt, der einen Rahmen (5) aufweist, der mindestens einen Strömungskanal (6) umfasst, wobei in jedem Strömungskanal (6) ein Schließelement (7) angeordnet ist, wobei das Schließelement (7) von einer offenen Stellung zu einer geschlossenen Stellung bewegt werden kann, und
wobei in der Öffnung (2) im Ventilrahmen (1) zwischen zwei benachbarten Ventilblocksäulen (4) eine Trägerstruktur (8) angeordnet ist, die an ihren Enden am Ventilrahmen (1) gelagert ist, und wobei an der Trägerstruktur (8) mindestens ein Ventilblock (3) teilweise gelagert ist,
**dadurch gekennzeichnet, dass** die Trägerstruktur (8) zwei Profile (9) mit U-förmigem Querschnitt umfasst, deren Stege (10) so miteinander verbunden sind, dass zwei Profile (9) mit U-förmigem Querschnitt eine Struktur mit I-förmigem Querschnitt bilden.

2. Explosionsschutzventil nach Anspruch 1, **dadurch gekennzeichnet, dass** die Trägerstruktur (8) mindestens ein Profil (9) mit U-förmigem Querschnitt umfasst, an dessen Ende durch Abkanten eine Befestigungsstruktur ausgebildet ist, um die Trägerstruktur (8) am Ventilrahmen (1) zu befestigen.

3. Explosionsschutzventil nach Anspruch 1 oder 2, **dadurch gekennzeichnet, dass** die Trägerstruktur (8) mindestens ein Profil (9) mit U-förmigem Querschnitt umfasst, an dessen Ende eine separate Befestigungsstruktur angebracht ist, um die Trägerstruktur (8) am Ventilrahmen (1) zu befestigen.

4. Explosionsschutzventil nach einem der Ansprüche 1 bis 3, **dadurch gekennzeichnet, dass** die Trägerstruktur (8) mindestens ein Profil (9) mit U-förmigem Querschnitt umfasst, wobei das Profil den Ventilrahmen (1) mindestens teilweise durchdringt, um die Trägerstruktur (8) am Ventilrahmen (1) zu befestigen.

5. Explosionsschutzventil nach einem der Ansprüche 1 bis 4, **dadurch gekennzeichnet, dass** die Trägerstruktur (8) mindestens ein Profil (9) mit U-förmigem Querschnitt umfasst, wobei das Profil durch Abkanten aus einem Rohteil dergestalt ausgebildet wird, dass aus dem Rohteil ein Profil (9) mit U-förmigem Querschnitt, das einen Steg und zwei Flansche aufweist, durch Abkanten ausgebildet wird.

6. Explosionsschutzventil nach einem der Ansprüche 1 bis 5, **dadurch gekennzeichnet, dass** es eine Trägerstruktur (8) umfasst, deren zwei Profile (9) mit U-förmigem Querschnitt aneinander befestigt sind.

7. Explosionsschutzventil nach einem der Ansprüche 1 bis 6, **dadurch gekennzeichnet, dass** es eine Trägerstruktur (8) umfasst, deren zwei Profile (9) mit U-förmigem Querschnitt in der Querschnittsform im Wesentlichen identisch sind.

8. Explosionsschutzventil nach einem der Ansprüche 1 bis 7, **dadurch gekennzeichnet, dass** es eine Trägerstruktur (8) umfasst, deren zwei Profile (9) mit U-förmigem Querschnitt im Wesentlichen die gleiche Länge aufweisen.

9. Explosionsschutzventil nach einem der Ansprüche 1 bis 8, **dadurch gekennzeichnet, dass** es mindestens einen Ventilblock (3) umfasst, in dem ein Schließelement (7) angeordnet ist, um sich unter Einwirkung einer Druckwelle von einer offenen Stellung zu einer geschlossenen Stellung zu bewegen.

10. Explosionsschutzventil nach einem der Ansprüche 1 bis 9, **dadurch gekennzeichnet, dass** es mindestens einen Ventilblock (3) umfasst, in dem jedes Schließelement (7) federbelastet ist, so dass jedes Schließelement (7) eingerichtet ist, um sich unter Einwirkung einer Druckwelle von einer offenen Stellung zu einer geschlossenen Stellung zu bewegen, und so dass jedes Schließelement (7) eingerichtet ist, um sich nach der Druckwelle in die offene Stellung zurückzubewegen.

## Revendications

1. Valve anti-explosion comprenant un bâti de valve (1) sur lequel des blocs de valve (3) peuvent être logés et qui comprend une ouverture (2) dans laquelle des blocs de valve (3) sont disposés pour former au moins deux colonnes de blocs de valve adjacente (4) de sorte que les blocs de valve (3) ferment essentiellement complètement l'ouverture (2),
dans laquelle il y a au moins un bloc de valve (3) ayant un bâti (5) comportant au moins un passage d'écoulement (6), un élément de fermeture (7) ayant été disposé dans chaque passage d'écoulement (6), ledit élément de fermeture (7) pouvant au moins être déplacé d'une position ouverte vers une position fermée, et
dans laquelle une structure de poutrelle (8) est disposée dans l'ouverture (2) dans le bâti de valve (1) entre deux colonnes de blocs de valve adjacente (4) de manière à être logée, à ses extrémités, sur le bâti de valve (1), et au moins un bloc de valve (3) étant partiellement logé sur ladite structure de poutrelle (8),
**caractérisée en ce que** ladite structure de poutrelle (8) comprend deux profilés (9) d'une forme de section transversale en forme de U dont les âmes (10) sont reliées entre elles de sorte que lesdits deux profilés (9) d'une forme de section transversale en forme de U constituent une structure d'une forme de section transversale en forme de I.

2. Valve anti-explosion selon la revendication 1, **caractérisée en ce que** la structure de poutrelle (8) comprend au moins un profilé (9) d'une forme de section transversale en forme de U à l'extrémité duquel une structure de fixation a été formée par pliage pour fixer la structure de poutrelle (8) sur le bâti de valve (1).

3. Valve anti-explosion selon la revendication 1 ou 2, **caractérisée en ce que** la structure de poutrelle (8) comprend au moins un profilé (9) d'une forme de section transversale en forme de U à l'extrémité duquel une structure de fixation séparée a été attachée pour fixer la structure de poutrelle (8) sur le bâti de valve (1).

4. Valve anti-explosion selon l'une des revendications 1 à 3, **caractérisée en ce que** la structure de poutrelle (8) comprend au moins un profilé (9) d'une forme de section transversale en forme de U, ledit profilé perforant au moins partiellement le bâti de valve (1) pour fixer la structure de poutrelle (8) sur le bâti de valve (1).

5. Valve anti-explosion selon l'une des revendications 1 à 4, **caractérisée en ce que** la structure de poutrelle (6) comprend au moins un profilé (9) d'une forme de section transversale en forme de U, ledit profilé étant formé à partir d'une pièce brute par pliage de sorte qu'un profilé (9) d'une forme de section transversale en forme de U comprenant une âme et deux ailes soit formé par pliage à partir de ladite pièce brute.

6. Valve anti-explosion selon l'une des revendications 1 à 5, **caractérisée en ce qu'**elle comprend une structure de poutrelle (8) dont les deux profilés (9) d'une forme de section transversale en forme de U sont attachés l'un à l'autre.

7. Valve anti-explosion selon l'une des revendications 1 à 6, **caractérisée en ce qu'**elle comprend une structure de poutrelle (8) dont les deux profilés (9) d'une forme de section transversale en forme de U sont essentiellement identiques en forme de section transversale.

8. Valve anti-explosion selon l'une des revendications 1 à 7, **caractérisée en ce qu'**elle comprend une structure de poutrelle (8) dont les deux profilés (9) d'une forme de section transversale en forme de U sont essentiellement d'une même longueur.

9. Valve anti-explosion selon l'une des revendications 1 à 8, **caractérisée en ce qu'**elle comprend au moins un bloc de valve (3) dans lequel un élément de fermeture (7) est disposé pour se déplacer, sous l'action d'une explosion, d'une position ouverte vers une position fermée.

10. Valve anti-explosion selon l'une des revendications 1 à 9, **caractérisée en ce qu'**elle comprend au moins un bloc de valve (3) dans lequel chaque élément de fermeture (7) est commandé par ressort de sorte que chaque élément de fermeture (7) soit adapté pour se déplacer, sous l'action d'une explosion, d'une position ouverte vers une position fermée, et que chaque élément de fermeture (7) soit adapté pour retourner dans la position ouverte après l'explosion.
